# FASCICULE DE BREVET EUROPEEN

(11) **EP 0 790 400 B1**
(45) Date de publication et mention de la délivrance du brevet: **16.05.2001**
(21) Numéro de dépôt: 97400321.2
(22) Date de dépôt: 13.02.1997
(51) Int. Cl.: F02K 1/70

(54) **Inverseur de poussée de turboréacteur à portes associées à un panneau amont**
Schubumkehrvorrichtung für ein Strahltriebwerk mit an der Vorseite der Hauptklappen verbundenen Hilfsklappen
Thrust reverser for a jet engine with doors linked to a front panel

(30) Priorité: 15.02.1996 FR 9601849
(43) Date de publication de la demande: 20.08.1997
(73) Titulaire: HISPANO-SUIZA AEROSTRUCTURES, 76700 Gonfreville l'Orcher (FR)
(72) Inventeur: Jean, Michel Christian Marie, 76700 Harfleur (FR)
(74) Mandataire: Berrou, Paul

(56) Documents cités:
- US-A- 3 601 992

## Description

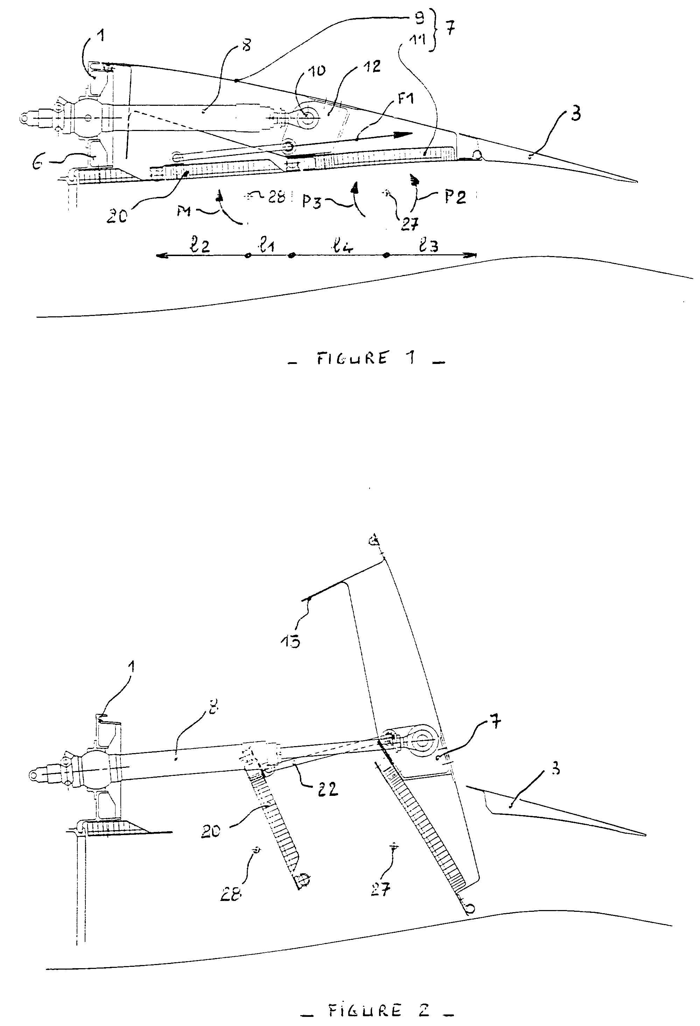

La présente invention concerne un inverseur de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Dans les applications visées par l'invention, l'inversion de poussée met en oeuvre principalement ou uniquement la déviation du flux secondaire froid.
On connaît par EP-A-0413635 un inverseur de poussée de turboréacteur à double flux qui a été schématiquement représenté sur les figures 1 et 2 des dessins joints. De manière ainsi connue, ce type d'inverseur de poussée comporte des portes 7 formant une partie mobile 2 et constituant en position inactive, lors d'un fonctionnement en jet direct, une partie de paroi extérieure de nacelle ou capotage extérieur et une structure fixe réalisant ce capotage extérieur en amont des portes, par une partie amont 1, en aval des portes, par une partie aval 3 et entre les portes 7 par l'intermédiaire de poutres reliant partie amont 1 et partie aval 3. Les portes 7 sont montées sur une circonférence du capotage extérieur et sont montées pivotantes dans une zone intermédiaire de leurs parois latérales sur lesdites poutres situées de part et d'autre des portes. Chaque porte 7 comporte une partie extérieure 9 formant une partie de la paroi extérieure de la nacelle et une partie intérieure 11 formant une partie de la paroi extérieure du conduit annulaire, ces parties étant reliées par les parois latérales et les parois amont et aval de la porte.La partie amont 1 de structure fixe comporte un cadre avant 6 qui sert de support aux moyens de commande des déplacements des portes 7, constitués dans l'exemple de réalisation représenté sur les dessins par des vérins 8 dont l'extrémité de tige est articulée en 10 sur la structure interne 12 de la porte 7. La partie amont de chaque porte 7 est doublée sur sa face interne par un panneau amont interne 20 relié à la porte 7 par au moins une biellette 22 et susceptible de pivoter par entraînement de la porte autour de pivots latéraux indépendants 28, lors du passage de la position de jet direct représentée sur la figure 1 à la position de jet inversé représentée sur la figure 2, telle qu'un passage est ménagé entre la porte 7 et le panneau amont 20. Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.
Comme exposé par EP-A-0.413.635 ce dispositif connu permet essentiellement d'améliorer les performances en jet direct grâce à une paroi de veine secondaire lisse, confondue avec les lignes aérodynamiques optimales et ne présentant pas de cavité préjudiciable et également d'obtenir que les efforts exercés sur l'ensemble de porte munie du panneau amont sous l'effet de la pression dans la veine tendent à l'auto-fermeture de l'ensemble en jet direct en assurant une position non-déployée stable.

Dans certaines applications particulières toutefois, les résultats précédemment obtenus grâce aux dispositions connues antérieures peuvent être remise en cause. Ainsi, dans certaines configurations de lignes aérodynamiques, notamment pour une faible hauteur de veine, la pression de veine qui s'exerce sur le panneau amont 20 tend à le faire ouvrir. En effet, les contraintes de cinématique peuvent imposer une position du pivot 28 en arrière du panneau amont 20 telle que la longueur aval 11 est inférieure à la longueur amont 12. Le couple induit symbolisé par la flèche P1 est transmis à la porte 7 via la biellette de liaison 22 exerçant ainsi une action symbolisé par la flèche F1. Même si l'action de la pression de veine sur la porte 7 symbolisée par la flèche P2 tend à l'auto-fermeture, il peut ainsi résulter un couple symbolisé par la flèche P3 qui a un effet d'auto-ouverture sur l'ensemble porte 7 munie de son panneau amont 20. De ce fait les risques de déploiement intempestif ne sont pas suffisamment maîtrisés.

En outre, comme cela est visible sur la figure 2, une découpe dans le panneau amont 20 peut être nécessaire pour éviter l'interférence entre ledit panneau 20 et le corps du vérin 8 dans la position de et inversé. Cette découpe qui peut être grande entraîne les inconvénients d'un affaiblissement structural du panneau amont 20, de difficultés pour réaliser l'étanchéité en jet direct et d'une réduction de la surface traitée acoustique.

Un inverseur de poussée à portes pivotantes du type précité répondant à ces conditions en évitant les inconvénients des réalisations connues antérieures est caractérisé en ce que les moyens de liaison entre la porte et le panneau amont sont constitués par une bielle dite à trois points, articulée respectivement en un premier point sur un support solidaire du panneau amont, en un deuxième point directement sur la porte et en un troisième point sur l'extrémité de tige du vérin de commande de manière que en position de jet direct les efforts exercés sur le panneau amont par la pression de veine et transmis par ladite bielle sur la porte créent sur la porte un couple nul ou un couple tendant à l'auto-fermeture de la porte en assurant à l'ensemble porte et panneau amont une position fermée stable.
Avantageusement, ladite bielle et le support solidaire du panneau amont sont disposés de manière à éviter toute interférence entre ledit panneau amont et le vérin de commande lors du passage à la position de jet inversé.
D'autres caractéristiques et avantages de l'invention seront mieux compris à la lecture de la description qui va suivre d'un mode de réalisation de l'invention, en référence aux dessins annexés sur lesquels :
- les figures 1 et 2 qui ont précédemment fait l'objet d'une description représentent une demi-vue schématique, en coupe longitudinale par un plan passant par l'axe de rotation d'un turboréacteur associé, d'un inverseur de poussée à portes pivotantes munies d'un panneau amont, d'un type connu et respectivement en position de jet direct et en position de jet inversé ;
- la figure 3 représente, selon une vue analogue à celle de la figure 1 un inverseur de poussée à portes pivotantes, en position de jet direct et conforme à un mode de réalisation de l'invention ;
- la figure 4 représente, selon une vue analogue à celle de la figure 2, l'inverseur de poussée représenté sur la figure 1, dans une position d'inversion de poussée.

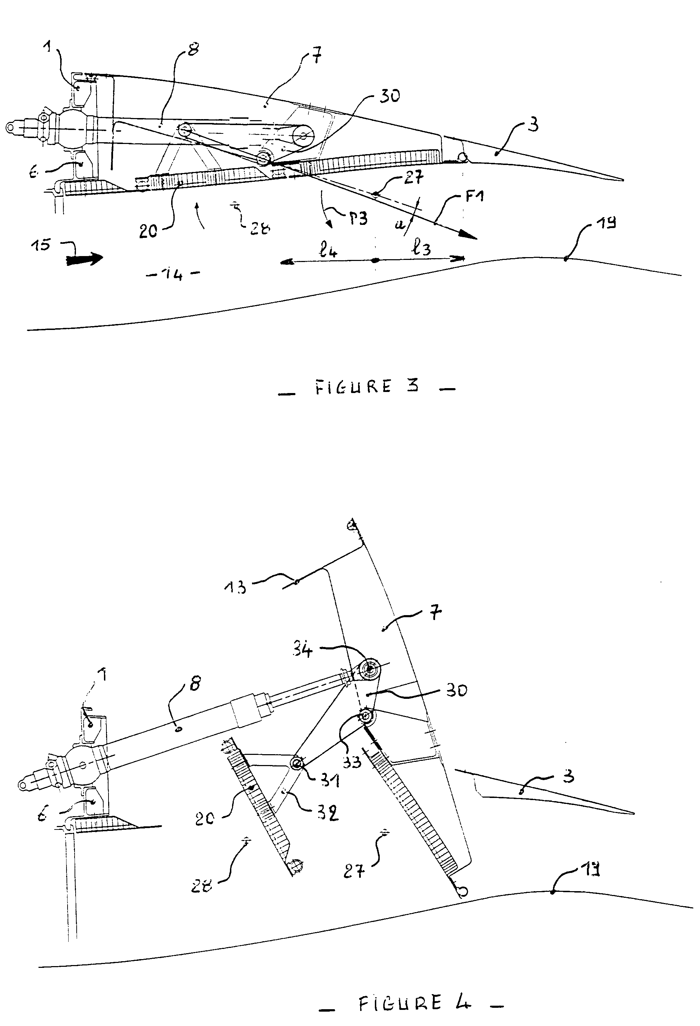

Selon un mode de réalisation de l'invention représenté sur les figures 3 et 4, un inverseur de poussée susceptible d'effectuer lors des phases de vol pertinentes d'un avion une inversion du flux secondaire d'un turboréacteur associé à double flux comporte les parties principales connues et précédemment décrites dans un exemple connu de réalisation, en référence aux figure 1 et 2. On retrouve notamment la structure fixe amont 1, les portes 7 et la partie fixe aval 3. On retrouve également un capot primaire 19 enveloppant le turboréacteur et formant la paroi intérieure du conduit annulaire 14 canalisant le flux secondaire symbolisé par la flèche 15. De même, chaque porte 7 est associée à un panneau amont 20. Toutefois, de manière remarquable et conforme à l'invention, le panneau amont 20 est relié à la porte 7 par une bielle 30 dite à trois points. Ladite bielle 30 présente une forme générale triangulaire et les trois sommets du triangle constituant les trois points sont occupés respectivement par un axe d'articulation. En un premier point 31 est réalisé l'accrochage de la bielle 30 sur un support intermédiaire 32 solidaire du panneau amont 20 ; en un deuxième point 33, la bielle 30 est directement articulée sur la structure de la porte 7 et au troisième point 34, l'extrémité de la tige du vérin 8 de commande des déplacements de la partie mobile de l'inverseur est articulée sur la bielle 30.
Lors du fonctionnement en jet direct, correspondant à la position fermée de la porte 7, représentée sur la figure 3, un dispositif connu en soi et non représenté sur les dessins tel qu'un verrou hydraulique assure le verrouillage de la porte 7 sur le cadre avant 6 de l'inverseur. Le vérin 8 de manoeuvre de la porte 7 est également muni d'une disposition connue en soi et non représentée en détails sur les dessins assurant un verrouillage fonctionnant par manque de pression et bloquant le vérin 8 dans sa position rentrée. Il s'agit par exemple d'un dispositif à manchon hydraulique ou d'un système à griffes à double effet, commandés par manque de pression. De manière remarquable et conforme à l'invention, en cas de panne créée par la défaillance simultanée des deux verrouillages précités, tout risque de déploiement intempestif de la porte 7 est cependant écarté.
En effet, les positions respectives et les formes géométriques des supports 32 et bielle 30 induisent que l'effort symbolisé par la flèche F1 est exercé par le panneau amont 20 sur la porte 7 suivant une direction formant un angle a avec la direction du pivot 27 de la porte 7 tel que le couple P3 résultant de cette action du panneau sur la porte et des efforts exercés par la pression de veine sur la porte 7 tend à fermer la porte 7. Même si la porte 7 est juste en équilibre dans le cas où la longueur aval 13 égale la longueur amont 14 ou si la porte par elle-même est légèrement auto-ouvrante, l'ensemble mobile de l'inverseur devient ainsi auto-fermant et la position fermée devient une position stable. Dans le cas où la porte 7 est déjà auto-fermante, l'angle a peut devenir nul et la direction de la bielle 30 entre les points 31 et 33 peut être alignée avec le pivot 27 de la porte 7.
Pour passer à la configuration d'inversion de poussée, représentée sur la figure 4, la porte 7 est susceptible de pivoter autour des pivots 27 sous l'action du vérin 8, déverrouillé par la pression et le panneau amont 20 est entraîné par l'intermédiaire de ladite bielle de liaison 30 en pivotant autour de son pivot 28. De manière remarquable et conforme à l'invention, les dispositions de la bielle 30 et du support 32 et les positions respectives des différentes articulations l'une par rapport à l'autre et par rapport aux pivots permettent d'éviter toute interférence entre le panneau amont 20 et le corps du vérin 8.

En fin d'ouverture, le vérin vient en butée et détermine la position précise de la porte 7 et du panneau amont 20. Le vérin reste sous pression et maintient l'ensemble dans la position recherchée d'inversion de poussée jusqu'à ce que la fermeture soit commandée. Par rapport à la solution connue antérieure telle que schématisée sur la figure 2, une course réduite du vérin 3 est en outre obtenue grâce aux dispositions de bielle 30 et de support 32. Un profil aérodynamique est déterminé pour la bielle à trois points 30 et pour le support 32 qui sont placés dans la veine du flux inversé afin de minimiser les pertes.
Lors du retour à la position de fermeture, la porte 7 bute sur le verrou fixé sur le cadre avant 6, déclenchant l'arrêt hydraulique et le double verrouillage précédemment mentionné du vérin 8 et de la porte 7.

## Revendications

1. Inverseur de poussée de turboréacteur à double flux comportant des portes pivotantes (7) susceptibles, en position fermée, lors d'un fonctionnement en jet direct, de s'intégrer dans la paroi extérieure de nacelle et susceptibles en outre de pivoter sous l'action d'un vérin (8) de commande des déplacements de manière à constituer des obstacles de déviation de flux lors d'un fonctionnement en inversion de poussée, chaque porte (7) étant doublée sur sa face interne par un panneau amont interne (20) relié à ladite porte (7) par des moyens de liaison déterminés de manière que après pivotement de la porte (7) et du panneau amont (20) autour de pivots respectifs indépendants (27,28), en position d'inversion de flux, un passage est ménagé entre la porte (7) et le panneau amont (20) caractérisé en ce que lesdits moyens de liaison entre la porte (7) et le panneau amont (20) sont constitués par une bielle (30) dite à trois points, articulée respectivement en un premier point (31) sur un support (32) solidaire du panneau amont (20), en un deuxième point (33) directement sur la porte (7) et en un troisième point (34) sur l'extrémité de tige du vérin de commande (8) de manière que en position de jet direct les efforts exercés sur le panneau amont (20) par la pression de veine et transmis par ladite bielle (30) sur la porte (7) créent sur la porte un couple nul ou un couple tendant à l'auto-fermeture de la porte en assurant à l'ensemble porte et panneau amont une position fermée stable.

2. Inverseur de poussée de turboréacteur à double flux selon la revendication 1 dans lequel ladite bielle (30) et ledit support (32) solidaire du panneau amont (20) sont disposés de manière à éviter toute interférence entre ledit panneau amont (20) et le vérin de commande (8) lors du passage à la position de jet inversé.

## Patentansprüche

1. Schubumkehrvorrichtung für ein Zweikreis-TL-Triebwerk, die Schwenkklappen (7) aufweist, welche geeignet sind, sich in geschlossener Stellung im Direktstrahlbetrieb in die Gondel-Außenwand einzufügen, und ferner geeignet sind, unter Einwirkung eines Betätigungselements (8) zur Steuerung von Bewegungen dergestalt zu schwenken, dass sie im Schubumkehrbetrieb Umlenkhindernisse bilden, wobei jede Klappe (7) an ihrer Innenseite durch eine innere Vorplatte (20) verdoppelt wird, die mit dieser Klappe (7) durch Verbindungsmittel verbunden ist, welche dergestalt beschaffen sind, dass nach dem Schwenken der Klappe (7) und der Vorplatte (20) um getrennte Drehzapfen (27 bzw. 28) in die Schubumkehrstellung zwischen der Klappe (7) und der Vorplatte (20) ein Durchlass entsteht,
**dadurch gekennzeichnet, dass** die genannten Verbindungsmittel zwischen der Klappe (7) und der Vorplatte (20) aus einer sogenannten Drei-Punkt-Stange (30) bestehen, die an einem ersten Punkt (31) an einer Halterung (32) angelenkt ist, die mit der Vorplatte (20) fest verbunden ist, an einem zweiten Punkt (33) direkt an der Klappe (7) angelenkt ist und an einem dritten Punkt (34) an dem Stangenende des Betätigungszylinders (8) dergestalt angelenkt ist, dass in Direktstrahlstellung die Kräfte, die durch den Stromdruck auf die Vorplatte (20) ausgeübt und durch die genannte Stange (30) auf die Klappe (7) übertragen werden, an der Klappe ein Null-Drehmoment oder ein Drehmoment, das die Tendenz hat, ein Selbstschließen der Klappe zu bewirken, erzeugen und dabei eine stabile Schließstellung der Klappe-Vorplatte-Gesamtanordnung gewährleisten.

2. Schubumkehrvorrichtung für ein Zweikreis-TL-Triebwerk nach Anspruch 1, wobei die genannte Stange (30) und die genannte mit der Vorplatte (20) fest verbundene Halterung (32) dergestalt angeordnet sind, dass jegliche gegenseitige Behinderung zwischen dieser Vorplatte (20) und dem Betätigungszylinder (8) beim Übergang in die Schubumkehrstellung vermieden wird.

## Claims

1. Thrust reverser for a bypass turbojet engine comprising pivoting doors (7) capable, in the closed position, when operating in direct jet mode, of being incorporated into the outer wall of the nacelle and also capable of pivoting under the action of a movement-control ram (8) so as to form obstacles deflecting the flux when operating in reverse-thrust mode, each door (7) being lined on its internal face by an internal upstream panel (20) connected to the said door (7) by connecting means designed so that once the door (7) and the upstream panel (20) have pivoted about independent respective pivots (27, 28) into the reverse-flux position, a passage is formed between the door (7) and the upstream panel (20), characterized in that the said means of connection between the door (7) and the upstream panel (20) consist of a link rod (30) of the so-called three-point link type, articulated respectively, at a first point (31) to a support (32) secured to the upstream panel (20), at a second point (33) directly to the door (7), and at a third point (34) to the end of the rod of the control ram (8) so that in the direct jet position the forces exerted on the upstream panel (20) by the stream pressure and transmitted by the said link rod (30) to the door (7) create on the door a zero moment or a moment that tends to cause the door to automatically close, giving the door and upstream panel assembly a stable closed position.

2. Thrust reverser for a bypass turbojet engine according to Claim 1 in which the said link rod (30) and the said support (32) secured to the upstream panel (20) are arranged in such a way as to avoid any interference between the said upstream panel (20) and the control ram (8) when moving into the reversed-jet position.
